# EUROPEAN PATENT APPLICATION

(11) **EP 4 737 878 A1**
(43) Date of publication of application: **06.05.2026**
(21) Application number: 24210010.5
(22) Date of filing: 31.10.2024
(51) Int. Cl.: G01M 11/02, G06T 7/00, G01N 21/958

(54) **METHOD AND APPARATUS FOR ENGRAVING REMOVAL**

(71) Applicant: Carl Zeiss Vision International GmbH, 73430 Aalen (DE)
(72) Inventor: Schoebel, Daniel, 73430 Aalen (DE); Sulugodu Arunachala, Vivek Bharadhwaj, 73430 Aalen (DE); Kungel, Christian, 81379 München (DE)
(74) Representative: Kraus & Lederer PartGmbB

(57) **Abstract**

The present invention relates to a computer-implemented method for identifying cosmetic defects of a spectacle lens, comprising: identifying, if at least one detected object in a captured image of the spectacle lens is associated with a first plurality of features; and extracting, the at least one detected object associated with the first plurality of features from the captured image before a cosmetic defect detection is performed.

## Description

### 1. Technical field

The present invention relates to a computer-implemented method and a corresponding apparatus for identifying cosmetic defects of a spectacle lens as well as a training method.

### 2. Prior art

In the manufacturing of spectacle lenses, a cosmetic defect inspection is important to ensure a high quality of each spectacle lens. Thereby, the spectacle lenses must be tested for cosmetic defects, particularly for surface flaws such as scratches, smears, cracks, chips, stains, and for occlusions such as inclusions or streaks. Limit values of tolerable flaws are established in internationally recognized standards for precision optics, specifically DIN 3140 or MIL-0-13830 or less stringent standards used by the ophthalmic industry, such as DIN 58203.

Conventionally, such an inspection of each spectacle lens is carried out by specially trained personnel, which determine whether certain defects (scratches, indentations, contaminations like for example dust, coating defects, etc.) are present. However, the use of specially trained personnel is cost-effective, time-consuming and may not guarantee an objective assessment without exception at any time.

Cosmetic defect inspection is a process of finding manufacturing defects on a surface that affect the quality of a produced spectacle lens either visually or functionally. This may be done after every production step or at the end of the production chain. Potential defects may be distributed punctually or over a large area of the spectacle lens. In certain circumstances the defects may cover the entire spectacle lens. Further, these defects may vary not only in their dimension but also in their appearance, which turns their classification in a sophisticated process. Furthermore, defects may be transparent and/ or non-transparent, which makes their detection challenging, in particular, on a transparent surface. Moreover, spectacle lens may have intended engravings, which can serve as orientation marks, codes for traceability or structures suitable for myopia control. An overlap of these intended engravings with one or more defects may hinder a reliable defect detection. Especially, when the overlap causes that the intended engraving no longer appearing continuous.

Recent developments have improved the ability of computers to detect and classify certain types of defects by using trained methods that have learned to detect and classify certain types of defects.

However, in these methods, every engraving, even the intended engravings, has to be processed and evaluated in the entire image. This results in a high computational and time effort. Moreover, the ability of a trained method to detect cosmetic defects fails in the case of an overlap of an intended engraving and a cosmetic defect or reduces the reliability of cosmetic defect detection significantly. In addition, it is particularly difficult for those methods to differentiate between an intended engraving and a cosmetic defect, when the intended engraving is defective (for example when a part of an orientation mark is missing).

It is therefore an object of the present invention to provide a computer-implemented method and a corresponding apparatus, which provide a more reliable automatic detection of cosmetic defects. It is a further object of the present invention to provide a training method, which improves the efficiency and reliability of intended engravings detection.

H. Chauris et al.: "A robust tool for detecting features with circular shapes" (Computers & Geosciences 37 (2011) 331-342) proposes a method for detecting circles on digital images. Thereby, a circlet transformation is used, which takes the finite frequency aspect of the data into consideration. Further, the circlet transformation is coupled with a soft thresholding process and applied to a series of images.

WO 2024/038170 A3 refers to a computer-implemented method for facilitating an identification of an optical mark in an image of a spectacle lens. Thereby, enhancement information based on the image of the spectacle lens is generated, wherein the enhancement information enhances the detectability of the optical mark in an automated identification process when impairing structures impair the detectability of the optical mark.

WO 2021/137745 A1 relates to a method for detection of imperfections in products using image analysis on digital representations of the products, wherein images of the products are captured through digital camera means and imported to data processing means running a computer executable artificial neural network.

US 2008/317329 AA is directed to method and apparatus which perform detection and classification of defect, such as a fine pattern defect and a foreign particle, based on an image of an object obtained using a light of a lamp, a light of a laser, or an electron beam, for thin film devices such as a semiconductor wafer, TFT, and a photomask.

WO 2018/098551 A1 refers to a method and a system for automatic inspection of material quality. Thereby, a pattern of lights reflected by or distorted through the inspected material is captured in an image, the captured image is processed and based on that the material defects are identified.

US 2010/0290694 A1 relates to a method and apparatus for detecting defects in optical components such as ophthalmic lenses. In particular, a deflectometry measurement using transmission of light is used, wherein a structured pattern is generated on a screen. The generated structured pattern is transmitted through a lens. A camera observes the structured pattern transmitted through lens and acquires images. These images comprise the distortion of the structured pattern through the lens.

WO 2023/041659 A1, which is considered the closest prior art, is directed to a method or an apparatus for quality control of ophthalmic lenses, wherein a pattern is imaged through the lens to be controlled. Thereby, an image is captured by a camera as a raw image and a basic image is generated from several raw images. The basic image is then subjected to a cascaded classification, wherein detected defects are quantified according to their intensity and judged as acceptable or unacceptable. This is done by means of at least one quality criterion, which is based on intensity, position and/or customer specifications.

### 3. Summary of the invention

The above-mentioned problem is solved by a computer-implemented method for identifying cosmetic defects of a spectacle lens, comprising identifying, if at least one detected object in a captured image of the spectacle lens is associated with a first plurality of features, and extracting, the at least one detected object associated with the first plurality of features from the captured image before a cosmetic defect detection is performed.

The extraction of identified objects, before a cosmetic defect detection is performed, causes that no objects associated with the first plurality of features are erroneously identified as cosmetic defects. Therefore, only real cosmetic defects are identified as cosmetic defects, which improves the reliability of cosmetic defect detection. In addition, based on the extraction, objects associated with the first plurality of features are not present during the cosmetic defect detection. Therefore, these objects are neither considered nor evaluated. Due to this, a more efficient and faster automatic cosmetic defect detection can be performed. Moreover, due to the extraction, a potential overlap of objects associated with the first plurality of features with a cosmetic defect is avoided. Thus, the reliability of cosmetic defect detection is further improved.

According to the present invention, every detected object associated with the first plurality of features is extracted before the cosmetic defect detection is performed. In further embodiments, a part of detected objects associated with the first plurality of features may be maintained which will be further explained below.

In context of the present invention, the term *"detected"* corresponds to any detection algorithm, which is configured to detect objects while processing the captured image. In one embodiment, the computer-implemented method may use a pattern matching algorithm. However, in further embodiments, the computer-implemented method may use any other algorithm suitable for object detection.

The object may correspond to a pixel or a pixel group comprising a common pixel color value deviating from a pixel color value of surrounding pixels. Thereby, the majority of pixels are contiguous in the pixel group. The common pixel color value of the detected object may be a range of pixel color values. The pixel color value of surrounding pixels may be a range of pixel color values. The object may be defined by a contrast between a common pixel color value or a pixel color value range of the object and the pixel color value or pixel color value range of surrounding pixels. The contrast may be dependent on a pre-defined threshold. The pre-defined threshold may be dependent on the captured image (resolution, illumination, etc.).

According to the present invention, the identification, if a detected object is associated with a first plurality of features, shall be interpreted to state that an identification of an association is possible, even if, the detected object is not entirely similar or matching with a feature from the first plurality of features. That is, when the detected object is not mathematical congruent with one of the features of the first plurality of features. Therefore, in the computer-implemented method, it is sufficient, if a part of the detected object is clearly assignable to a feature of the first plurality of features. Based on this, a detected object, which may be defective in its structure (e.g., a part of its structure is missing due to erroneous engraving of an intended engraving) can be still identified as *"associated with the first plurality of features".*

In the context of the present invention, an extracting of an object from an image is understood as a removing of pixels belonging to the detected object and a refilling of pixels on the same place of the removed pixels with a certain pixel color value. The result is a filtered image, whereby the extracted objects are removed in such a way that the extracted objects are not recoverable based on the filtered image. In a preferred embodiment, an artificial intelligence-based infill-model may be used. The artificial intelligence-based infill-model may be able to continue detected objects not associated with the first plurality of features that are intersected by one or more removed objects associated with the first plurality of features (for example due to an overlap). Therefore, the artificial intelligence-based infill-model may be able to create the filtered image without any loss of information regarding detected objects not associated with the first plurality of features. In further embodiments, other refilling methods based on the average, median, gradient or statistical distribution of the surrounding pixel-values not associated with the first plurality of features may be used.

According to the present invention, the term *"captured"* belongs to any capturing unit, which is configured to capture an image of the spectacle lens. In a preferred embodiment, the spectacle lens to be controlled may be subjected to transmissive deflectometry, whereby a camera captures a sinusoidal pattern, which is transmitted through the spectacle lens. However, in further embodiments any other image generation process may be used.

The term *"spectacle lens"* as used herein is a broad term and is to be given its ordinary and customary meaning to a person of ordinary skill in the art and is not to be limited to a special or customized meaning. The term specifically may refer, without limitation, to a lens body that comprises a particular shape that is configured for a purpose of determining and/or altering a vision of a wearer of the spectacle lens. Based on standard ISO 13666:2019, also herein referred to as "*Standard*", 3.5.2, the term *"spectacle lens"* may refer to a particular kind of optical lens which is used for determining and/or altering the vision of the wearer of the spectacle lens, wherein the spectacle lens is carried in front of the eye of the wearer, thereby avoiding a direct contact with the eye of a wearer. Instead of the term *"wearer",* a different term, such as *"person", "subject",* or *"user",* may also be applicable. In general, the spectacle lens may be a unifocal lens having a single focal point; may have at least two distinguishable focal points, such as a bifocal lens, a multifocal lens, or a variofocal lens; or may be a progressive lens which comprises a transition between differently focusing portions of the spectacle lens, which, according to the Standard, 3.16, are, typically, distributed over the surface of the spectacle lens in a fashion that a so-denominated "*far portion"* is designated for providing distance power to be used for altering a so-denoted "*far vision",* while a so-denominated *"near portion"* is designated for providing near power to be used for altering a so-denoted *"near vision".* However, further kinds of spectacle lenses are conceivable. As used herein, the term *"spectacle lens"* may comprise the spectacle lens at any manufacturing stage, in particular any manufacturing stage as described in the Standard, 3.8. By way of example, the spectacle lens may, thus, comprise a precursor of the spectacle lens, irrespective of a manufacturing stage of the precursor, particularly a semi-finished spectacle lens blank; or a semi-finished spectacle lens; or a finished spectacle lens being ready for receiving at least one additional processing step, particularly selected from a finishing step or a refining step, such as a coating step. However, further manufacturing stages of the spectacle lens are conceivable. Therefore, the spectacle lens to be controlled by cosmetic inspection may be a semi-finished lens blank, a finished uncut spectacle lens or a finished spectacle lens.

As generally used, the term "*computer-implemented method"* may refer to a method that involves a programmable apparatus, in particular, a computer, a computer network, or a readable medium carrying a program, whereby at least one of the steps of the method may be performed and/or supported by using at least one computer program. Alternatively, the at least one computer program may be accessible by an apparatus which may be adapted for performing the method via a network, such as via an in-house network, a cloud server, or via internet. With particular regard to the present invention, the present method can, thus, being performed on a programmable apparatus that is configured for this purpose, such as by providing a computer program being configured for such a purpose.

The first plurality of features may comprise intended engravings of the spectacle lens.

According to the present invention, intended engravings are engravings, which are created willfully on the spectacle lens during one or more manufacturing steps. Some of these engravings may be intended to remain on the spectacle lens until the next manufacturing step(s) or to remain on the finished spectacle lens, such that they are visible to a wearer. Some other initially intended engravings may be removed from the lens by cutting, edging or cribbing.

Since all objects associated with the first plurality of features are extracted before a cosmetic defect detection is performed, the cosmetic defect detection is only performed on unintended engravings or objects not associated with the first plurality of features like for example cosmetic defects. Due to this, the computer-implemented method has only to evaluate the remaining conspicuous pixels, which belong to objects not associated with the first plurality of features (e.g., failures like unintended engravings, cosmetic defects, contaminations, etc.). Based on this, the computational effort can be significantly reduced. Furthermore, as the intended engravings are extracted before the cosmetic defect detection is performed, no intended engravings are erroneously evaluated as cosmetic defects, which improves the reliability of cosmetic defect detection. Moreover, since intended engravings are used for specific purposes (e.g., for orientation, for traceability, for myopia control, etc.) their appearance is known due to their standardized use in the production chain. In one embodiment, a list of possible intended engravings may be stored in a data base or a global data base that the computer-implemented method can access. In a further embodiment, the computer-implemented method may has learned possible engravings by a training method using artificial intelligence (e.g., supervised learning). Based on the known appearance, the computer-implemented method is able to compare the known intended engravings directly with the respective detected object. The direct comparison leads to a more efficient and fast identification of the intended engraving. Besides, since the computer-implemented method knows the appearance of the intended engravings, an identification that the detected object is associated with the first plurality of features is possible even if the detected object comprises a defective intended engraving (e.g., when a part of the intended engraving of the detected object is missing). For identification of an association, it may be sufficient if the overlap of the intended engraving with the detected object is 70 precent matching. In other cases, where the intended engravings comprise a more complex structure (e.g., a DMC or the like), less than 70 precent matching may be sufficient. In some embodiments, a matching of at least 50 percent may be sufficient for a reliable identification.

The term *"data base"* as used herein is a broad term and is to be given its ordinary and customary meaning to a person of ordinary skill in the art and is not to be limited to a special or customized meaning. The term specifically may refer, without limitation, to an arbitrary collection of information, such as information stored in at least one data storage device. The data base may comprise the at least one data storage device with the information stored therein. In particular, the data base may contain an arbitrary collection of information. Further, the data base may refer to an organized collection of data, generally stored and accessed electronically from a computer or computer system. The data base may comprise or may be comprised by a data storage device. The data base may comprise at least one data base management system, comprising a software running on a computer or computer system, the software allowing for interaction with one or more of a user, an application or the data base itself, such as in order to capture and analyze the data contained in the data base. The data base, containing the data, may, thus, be comprised by a data base system which, besides the data, comprises one or more associated applications. Furthermore, the data base may be or may comprise at least one data base selected from the group consisting of: at least one server, at least one server system comprising a plurality of servers, at least one cloud server or cloud computing infrastructure. The data base may comprise at least one storage unit configured to store data.

In context of the present invention, the *"global data base"* is unlike to local or regional data bases, which are hosted at a single physical location. The global data bases may be located at multiple locations around the world or at least in multiple regions to ensure global availability. The global data bases may be configured to enable users or applications to access stored data from anywhere in the world. Further, the global data base may provide redundancy and enhance fault tolerance by distributing the data base across different geographical locations. If one location fails or becomes unreachable, users or application can still access the data from other locations. Further, it may be provided that by placing data base nodes in different regions, users or applications may access data from their vicinity, reducing latency and improving performance. The global data base may be further configured to implement mechanisms to ensure the consistency of data across different locations.

The intended engravings may comprise at least one of: an orientation mark, a code, a structure suitable for myopia control, an electronic structure, an optical structure, an individualized information or a design pattern.

In context of the present invention, an orientation mark belongs to a mark, which is suitable for determining an orientation of the spectacle lens. The orientation mark may be an alignment reference mark. A code (e.g., a DMC, a barcode, a linear code, a QR-code, etc.) provides the possibility to trace back the last manufacturing step or the complete process chain of each individual spectacle lens. Thereby, each code may comprise a unique assignment to a data base comprising individualized information of each spectacle lens. In a further embodiment, each code may comprise a unique assignment to a global data base. Furthermore, a structure suitable for myopia control may comprise diffractive structures such as Fresnel rings. These structures are used to control (and in the best-case retard) myopia progression. Electronic and optical structures are often used in smart lens. The individualized information may be a name abbreviation, a symbol or a date with the purpose of individualized assignment. The design pattern serves for further individualization and assignability of the spectacle lens and provides a specific optical appearance.

The identification of an optical mark may include determining a location of the engraving referenced in a coordinate system of the spectacle lens and/or in a world-based coordinate system and/or in a coordinate system of the image of the spectacle lens.

According to the present invention, the term *"myopia progression"* refers to a temporal alteration, in particular a decrease, especially a monotonous decrease, of the refractive power of the at least one eye of the person over a period of time (for example 1 year to 12 years or 4 years to 8 years).

According to the present invention, intended engravings may be created by molding, may be embossed (by using a specific pressure and temperature), may be established by laser radiation (e.g., laser swelling, etc.), may be created by additive methods (e.g., printing the intended engravings directly on the lens or indirectly on the mold) or may be applied by means of a transparent sticker comprising the intended engraving.

As mentioned above, according to the present invention, every intended engraving is extracted before the cosmetic defect detection is performed. In further embodiments, every intended engraving except a specific intended engraving may be removed. Based on that, a quality control of the specific intended engraving can be carried out (e.g., to determine if the intended engraving is defective, etc.).

In the ophthalmic industry, dimension, shape and location of orientations marks (e.g., alignment reference marks) and codes (e.g., DMC, bar code, QR code, etc.) are highly standardized on a spectacle lens. In a common production chain, every lens may be associated with specific lens information, which also comprises information regarding intended engravings. Based on the standardization and/ or the specific lens information the computer-implemented method knows the dimension, shape and location of the intended engravings. Based on this, the computer-implemented method knows where to expect a specific intended engraving. This leads to a fast identification of intended engravings.

In case of intended engravings, which may cover only a small part of the spectacle lens (e.g., orientation mark, code, small structures, or individualized information), a fast selection of the region of interest (ROI) based on the knowledge of the dimension, shape and location can be achieved. Therefore, an efficient extraction of the pixels belonging intended engravings can be ensured. In case of intended engravings, which may cover the entire spectacle lens (e.g., structures for myopia control, extended structures, or design pattern), the computer-implemented method knows not only the dimension, shape and location but also a symmetry of the intended engravings. Based on this, an efficient extraction can be realized.

The method may further comprise the step of identifying, if at least one detected object in the captured image of the spectacle lens is associated with a second plurality of features.

In context of the present invention, the second plurality of features is different from the first plurality of features. Instead of being extracted, detected objects associated with the second plurality of features remain on the processed image of the spectacle lens. Due to this, the computer-implemented method can set the focus on objects associated with a second plurality of features, which leads to an improved reliability of the evaluation of objects associated with a second plurality of features.

At least one object associated with a second plurality of features may be identified at a position in the captured image, where the at least one detected object associated with the first plurality of features has been extracted from the captured image.

According to the present invention, the extraction of pixels associated with the first plurality of features is accompanied by a refilling of pixels. In the preferred embodiment, the artificial intelligence-based infill-model may be used. The artificial intelligence-based infill-model may be able to reconstruct detected objects associated with the second plurality of features that were overlapped by objects associated with the first plurality of features. In further embodiments, other refilling methods based on the average, median, gradient or statistical distribution of the surrounding pixels not associated with the first plurality of features may be used.

This leads to the advantage that a reliable identification of objects associated with the second plurality of features can be ensured even if objects associated with a second plurality of features are overlapping with objects associated with the first plurality of features. Based on the refilling methods explained below, the extracting of objects associated with the first plurality of features does not impact the visibility of objects associated with the second plurality of features in the processed image, even in case of an overlap.

As explained above, according to the present invention, the extracting of an object from an image is understood as a removing of pixels belonging to the detected object and a refilling of pixels on the same place of the removed pixels with a certain pixel color value or a pixel color value range. Thereby, refilling methods based on the average, median, gradient or statistical distribution of the surrounding pixels not associated with the first plurality of features may be used.

The at least one detected object associated with the second plurality of features may comprise a cosmetic defect of the spectacle lens.

Due to the removing of any other structures not belonging to cosmetic defects, a more reliable automated cosmetic defect detection can be realized. Moreover, the computational effort can be significantly reduced.

A cosmetic defect is an anomaly, which impacts the performance of the spectacle lens at least partly, by reducing the transmitted light intensity and by deflecting the incident light. Thereby, it is dependent on the cosmetic defect, if the effect of reducing the transmission intensity or deflecting the incident light is more dominant.

The cosmetic defect may be transparent or opaque.

Since the cosmetic defect detection is able to identify transparent and opaque cosmetic defects, an entire automated cosmetic defect detection can be performed, which is comparable with a manual cosmetic defect inspection carried out by specially trained personnel. This leads to the advantage that the automated cosmetic defect detection ensures an objective assessment at any time and a reduced time investment by maintaining the same quality as the manual cosmetic defect inspection.

According to the present invention, transparent cosmetic defects mainly deflect the incident light, whereby an opaque cosmetic defect mainly reduces the intensity of the transmitted light.

The least one detected object associated with the second plurality of features may be classified. The detected object may be classified based on pre-defined criteria (e.g., dimension, shape, location or intensity like pixel color value and/or number of pixels, etc.). Then the detected object may be evaluated based on a class related sensitivity (e.g., pixel color value, number of pixels, etc.). Depending on the class, the sensitivity and, therefore, the pre-defined threshold may vary. The assignment of the detected object to a specific class allows a more efficient evaluation of the detected object. After the extracting of intended engravings only detected objects remain, which are not expected. Therefore, even in a case, where the detected object cannot be classified in a known category, it is still clear that the unknown detected object belongs to a cosmetic defect. This leads to the advantage that the lens will be reliable sorted out even if the detected object is unknown.

According to the present invention, all detectable objects in the captured image of the spectacle lens are associated either to a first plurality of features or to a second plurality of features. If the detected object is not associated with the first plurality of features, the detected object is automatically associated with the second plurality of features, even if the detected object cannot be classified in a known category (e.g., type of cosmetic defect). In that case, an unknown category may be established in the classification process.

The detected cosmetic defect may be classified based on its dimension. On the one hand, a classification based on an extension of the detected cosmetic defect on the spectacle lens serves to identify the type of the cosmetic defect in a more reliable and efficient manner. On the other hand, a sufficient resolution of the cosmetic defect can be calculated without exceeding the computational effort in an unnecessary manner.

The same type of a cosmetic defect may be classified in more than one-dimension classes. For example, a polishing error may extend over the entire spectacle lens and another polishing error may extend only over a part of the spectacle lens. In one embodiment three sub-classes may be specified.

Thereby, the first sub-class may be defined by cosmetic defects, which comprise a punctual extension, preferably of less than 3mm, more preferably of less than 1mm (e.g., dust particle, adhesive splatter, occlusion of air, which form a inclusion, formation of a circular concave indentation or convex protrusion, etc.).

The second sub-class may be defined by cosmetic defects, which comprise a local extension over at least a part of the spectacle lens (e.g., scratches, indentations, polishing errors, ferntree, coating defects, etc.). Moreover, also cosmetic defects of the first sub-class may be categorized in the second sub-class. This is the case, when the cosmetic defects of the first sub-class may occur more frequently and/ or form a specific pattern in a specific area, whereby the specific area comprises a dimension of the second sub-class. In one case, cosmetic defects of the first sub-class, which are categorized in the second sub-class may be distributed equidistantly in the specific area (for example like an equidistant point cloud). In another case, the cosmetic defects of the first sub-class, which are categorized in the second sub-class may be distributed in such a way that they comprise a centrum or an area with a high density and an environment with a lower density in the specific area (with continuous or stepwise decrease in density or even alternating). In addition, cosmetic defects of the first sub-class, which are categorized in the second sub-class may comprise a point symmetrical distribution or any other distribution (like for example a comet tail or a periodic pattern).

The third sub-class may be defined by cosmetic defects, which comprise an extension over the entire spectacle lens (e.g., a wrong color of the spectacle lens due to defective coating or evaporation, center thickness error, etc.).

The detected cosmetic defect may be further classified in a defect category of a plurality of defect categories. The plurality of defect categories may comprise at least one of: surface defects, substrate defects, finishing defects.

A surface defect is a defect which occurs on the surface of the lens after the molding process. The surface defect may be an unintended engraving (e.g., scratch, indentation, dent, polishing marks, grooves, etc.), a contamination (e.g., dust, adhesive, etc.), a crazing, a femtree (e.g., a surface error due to electrostatic discharge), a formation of a circular concave indentation or convex protrusion, or structural inconsistencies on the surface.

A substrate defect is a defect which extends underneath the surface of the lens after the molding process. The substrate defect may be a chipped material, a pull out, an inclusion (e.g., an inclusion of air), a center thickness error (e.g., based on a polishing error, failure during mold process, etc.), a formation of a circular concave indentation or convex protrusion, or structural inconsistencies on the substrate.

A finishing defect is a defect which occurs after the manufacturing steps of coating and/ or evaporation. The finishing defect may be a coating defect (e.g., occlusions, inhomogeneous coatings, etc.), defective color (e.g., incorrect material composition during evaporation, wrong layer thickness or inhomogeneous layer due to temperature and/ or pressure fluctuations during evaporation, etc.), a contamination (e.g., dust, adhesive, etc.), flow lines, delamination.

Based on the defect category a specific sensitivity (e.g., pixel color value, number of pixels, etc.) may be predefined, which allows a more reliable and efficient evaluation of the detected object.

In one embodiment, the classification, which is based on dimension may be combined with the classification in different defect categories. The classification may be performed as a cascaded classification. A cascaded classification leads to the advantage that a reliable defect detection with low computational and/or time requirements can be ensured.

The steps of classifying may be carried out by means of at least one class-specific neural network using artificial intelligence. Thereby, the neural networks may operate independently, i.e. do not influence each other for the different classes (dimension, type, etc.). This allows an effective classification, wherein a particularly specific defect detection is made possible, since individual defects can be detected independently from others. This results in a higher reliability of the defect detection. Thereby, for every class and/or category a neural network is trained separately and independently, which allows a very easy and targeted training. This specific training leads to a simple way of finding the relevant sensitivity for every class/category without affecting the detection of other defects. Another advantage of independently operating neural network may be that the operator can feed back to the neural network, which defect classes are to be considered more carefully (e.g., adapt the sensitivity).

Further, due to the extraction of intended engravings, the training of the class specific neural network can be realized more quickly, since the processing of intended engravings is not carried out. Moreover, since the structure of manufactured intended engravings may vary, the complexity introduced by the variance of those engravings is preemptively removed from the training data. A pattern matching algorithm may be used comprising an artificial neural network, wherein the artificial neural network may be trained to identify, if the at least one object is associated with the first plurality of features in the captured image. As explained above, possible intended engravings may be trained using artificial intelligence (e.g., supervised learning). The neural network may be trained on captured images. Due to the high standardization of intended engravings in the ophthalmic industry, the neural network may be also trained on simulated data. Simulated training data can be easily generated artificially. Based on this, a simple and efficient training of the intended engravings can be ensured. Moreover, based on the pattern matching algorithm, an association to a first plurality of features can be identified even if the intended engraving is dynamic (e.g., the shape comprises a certain variance) or defective (e.g., a part of the intended engraving is missing). This reduces the number of erroneous identified cosmetic defects, which are in fact defective intended engravings. Moreover, intended engravings can be reliable detected even if they comprise the certain variance. Based on the complexity of the intended engravings, different degrees of matching of the detected object and the intended engraving must be fulfilled. For example, a DMC may comprise a more complex structure than the structure of an orientation mark. Thus, for matching the standardized DMC less degree of matching is required compared with the matching of the standardized orientation mark.

In a further embodiment, the computer-implemented method may be able to access the information associated with the unique identifier (e.g., means for reading a DMC and access to the related data base) on each spectacle lens. Based on this, a fast extraction of the intended engravings can be realized, since the information associated with the unique identifier may comprise where to expect a certain intended engraving at a specific position.

The present invention also relates to an apparatus for identifying cosmetic defects of a spectacle lens, comprising means for identifying, if at least one detected object in a captured image of a spectacle lens is associated with a first plurality of features, and comprising means for extracting, the at least one detected object associated with the first plurality of features from the captured image before a cosmetic defect detection is performed.

In context of the present invention, the means for identifying and the means for extracting may be data processing means. The means may be one or more components of the apparatus. The components may be one or more hardware components specifically configured to carry out the stated processes/algorithm, implemented by a processor configured to perform the stated processes/algorithm, stored within a computer-readable medium for implementation by a processor, or some combination thereof.

The invention is also directed to a computer-implemented method for training an artificial neural network for identifying intended engravings in a captured image of a spectacle lens, the method comprising: receiving captured images of a spectacle lens comprising intended engravings, wherein each of the intended engravings comprise a plurality of circles and training an artificial neural network based on received images to identify intended engravings in a captured image of a spectacle lens, wherein the artificial neural network is trained to use circlet transformation to detect the plurality of circles of the intended engravings.

In context of the present invention, a neural network using artificial intelligence, shortly referred to as neural network, generally consists of connected units or nodes referred to as artificial neurons, which are connected by so called edges. The neurons are organized in layers, which include an input layer receiving the input data like for example the captured or simulated image of the spectacle lens, hidden layers which process the input data and an output layer which outputs the identified intended engravings.

The intended engravings may be created by laser radiation. Thereby, the intended engraving may be created directly by applying laser radiation to the spectacle lens or indirectly by applying laser radiation to a mold. Due to this, the intended engravings may comprise a plurality of circles. Moreover, the intended engravings may comprise a plurality of circles with blurry edges. Further, based on the used laser an expected range of radii of the circles may be known. The expected radii may be less than 150 µm. Preferably, the expected radii may be between 60 µm and 100 µm. In case of training for identifying intended engravings, the usage of circlet transformation is advantageous for detecting circles on digital images in an economic and robust manner. On the one hand, the circlet transformation operates directly on image gradient without the need of binary segmentation. On the other hand, the implementation is efficient since it comprises only a few Fast Fourier Transforms (FFT).

According to the present invention, the weights of the neural network to identify the intended engravings are achieved by training the neural network with data from the captured image and/ or simulated data. The neural network is trained to identify intended engravings based on a specific circlet structure.

The invention also relates to a computer program comprising instructions which, when executed by a computer, cause the computer to perform the steps of one of the methods described herein.

Accordingly, in one or more example aspects, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by a computer.

As used herein, the terms *"have", "comprise"* or *"include"* or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "*A has B",* "*A comprises B"* and "*A includes B"* may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms *"at least one", "one or more"* or similar expressions indicating that a feature or element may be present once or more than once typically will be used only once when introducing the respective feature or element. In the following, in most cases, when referring to the respective feature or element, the expressions *"at least one"* or *"one or more"* will not be repeated, non-withstanding the fact that the respective feature or element may be present once or more than once.

Further, as used herein, the terms *"preferably", "more preferably", "particularly", "more particularly", "specifically", "more specifically"* or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by *"in an embodiment of the invention"* or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

### 4. Short description of the figures

In the following, exemplary embodiments of the invention are described with reference to the figures. These figures show:
- Fig. 1:: A flow chart of an example of a preferred embodiment illustrating the computer-implemented method according to the present invention.
- Fig. 2:: Another example of the preferred embodiment shows method steps of an extraction of intended engravings and a providing of a filtered captured image according to the present invention.
- Fig. 3:: Another example of the preferred embodiment illustrates the extraction of intended engravings in a captured image from a spectacle lens according to the present invention.
- Fig. 4:: Another example of the preferred embodiment shows the extraction of intended engravings in a region of interest in the captured image according to the present invention.
- Fig. 5:: Another example of the preferred embodiment illustrates a method for training and identifying intended engravings according to the present invention.
- Fig. 6:: An example of an intended engraving of the preferred embodiment according to the present invention.
- Fig. 7:: Another example of an intended engraving of the preferred embodiment

### 5. Detailed description of preferred embodiments

Possible embodiments of the present invention will be described in the following detailed description primarily with reference to automated cosmetic defect detection. It is emphasized, that the present invention is not limited by these embodiments.

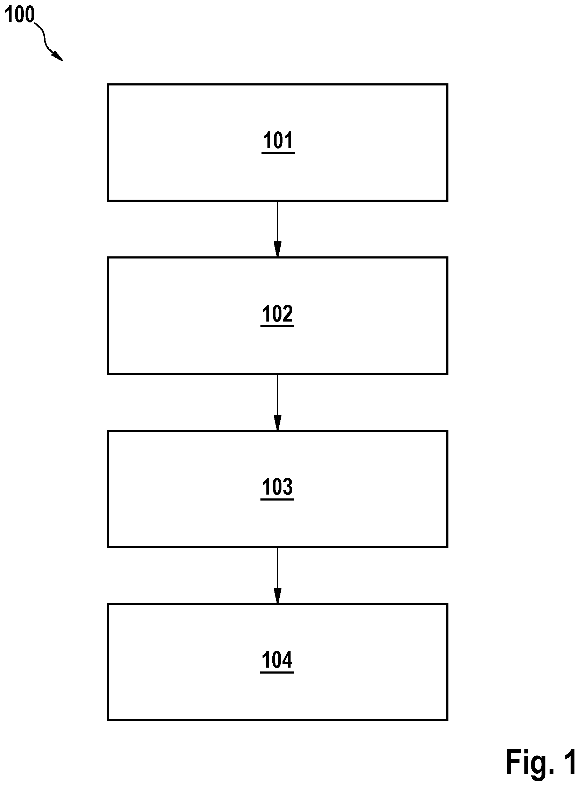

Fig. 1 shows a flow chart of a preferred embodiment 100. In method step 101 an image from a spectacle lens to be controlled is captured. The step of imaging may be carried out by an imaging unit. The image may be captured by a camera. The camera may disclose a CCD sensor. The spectacle lens may be a semi-finished spectacle lens blank, a semi-finished uncut spectacle lens or a semi-finished spectacle lens. In further embodiments, the lens to be controlled may be any other lens, which is used in the ophthalmic industry. In the preferred embodiment, the image may be captured by subjecting the spectacle lens to transmissive deflectometry. In further embodiments, other image generating processes may be used. The spectacle lens comprises a plurality of objects on its lens surface. Objects of the lens surface may deflect and/or decrease the transmission of the incident light. The deflection and/or decreasing of the transmission of the incident light, due to objects, is captured in the image. In case of transmissive deflectometry, objects on the lens surface may lead to a distortion of the sinusoidal pattern transmitted through the lens.

The captured image of the spectacle lens may disclose objects associated with a first plurality of features and objects associated with a second plurality of features. Objects associated with the first plurality of features may be intended engravings. Intended engravings may be an orientation mark, a code, a structure suitable for myopia control, an electronic structure, an optical structure, an individualized information, a design pattern or a combination thereof. Objects associated with the second plurality of features may be cosmetic defects. Cosmetic defects may be for example a contamination (e.g., a dust, an adhesive residue, etc.), an unintended engraving (e.g., a scratch, an indentation, a protrusion, a polishing error, etc.), a coating defect (e.g., occlusions, inhomogeneous coatings, etc.), defective color (e.g., an incorrect material composition during evaporation, wrong layer thickness or an inhomogeneous layer due to temperature and/ or pressure fluctuations during evaporation, etc.), a inclusion (e.g., an inclusion of air), a femtree (e.g., a surface error due to electrostatic discharge), a formation of a circular concave indentation or convex protrusion, a center thickness error (e.g., based on a polishing error, a failure during mold process, etc.) or a combination thereof.

In method step 102, objects associated with a first plurality of features are detected. In a preferred embodiment, the intended engravings may be detected by using pattern matching algorithm. The pattern matching algorithm may comprise an artificial neural network, which is trained to identify intended engravings based on their shape. In further embodiments, the training of the identification of the intended engravings may be also based on the dimension of the intended engravings and/ or on the location of the intended engravings on the spectacle lens. The neural network may be trained on captured images of spectacle lens. Based on the high standardization of intended engravings in the ophthalmic industry, the neural network may be also trained on simulated data. In method step 102, several independent neural networks may be used to identify specific types of intended engravings.

Detected objects, which are identified as intended engravings, are removed from the captured image. The pixel associated with the intended engravings define a specific pixel color value or a range of specific pixel color values. In a preferred embodiment, the artificial intelligence-based infill-model as explained above may be used. In a further embodiment, refilled pixels may comprise an average pixel color value of the nearest neighbor pixels, which are not associated with the intended engraving. In other embodiments, a median pixel color value may be used instead of the average pixel color value. In another embodiment, the pixel color value to refill the removed pixel may be determined from one or more cluster of pixels. The cluster of pixels may be selected from a location of the image, where no objects are present. The pixel color value to refill may be the pixel color value, which occurs most frequently in the one or more cluster of pixels. In further embodiments, other refilling methods may be used. The result of method step 102 is a filtered image, which only disclose objects associated with the second plurality of features like for example cosmetic defects or unknown objects. The step of removing the intended engravings may be achieved in such a way that based on the filtered image, the intended engravings are not recoverable. According to the preferred embodiment, the artificial intelligence-based infill-model may be able to restore or recover cosmetic defects that are intersected by one or more removed intended engravings (for example due to an overlap). Thus, the artificial intelligence-based infill-model may be able to create the filtered image without any loss of information regarding detected cosmetic defects (for example by recovering information, which were lost during the extraction step).

In method step 103, the filtered image is processed. An image processing unit may be used to analyze the filtered image. During the processing, conspicuous pixels relating to cosmetic defects are identified. The identification may be based on a predefined specific threshold. The threshold may be pre-defined based on the lens typ. The intensity (e.g., number of pixels, pixel color value), the shape, the dimension and the location may be stored for further evaluation.

In method step 104, the identified conspicuous pixels are further evaluated. Thereby, a cosmetic defect is detected and classified. In a preferred embodiment, detected cosmetic defects may be classified based on their dimension. In a further embodiment, detected cosmetic defects may be further classified based on their location. In another embodiment, detected defects may be further classified based on their shape (e.g., type of cosmetic defect). The classification may be a combination of these three mentioned embodiments. The classification may be performed as a cascaded classification. The steps of classifying may be carried out by means of a class-specific neural network. Thereby, the neural networks for the different classes (dimension, type, location, etc.) may operate independently, i.e. do not influence each other. The method may comprise a feedback loop. In case of a low confidence value, an operator may manually feed back to the system if the classification is correct.

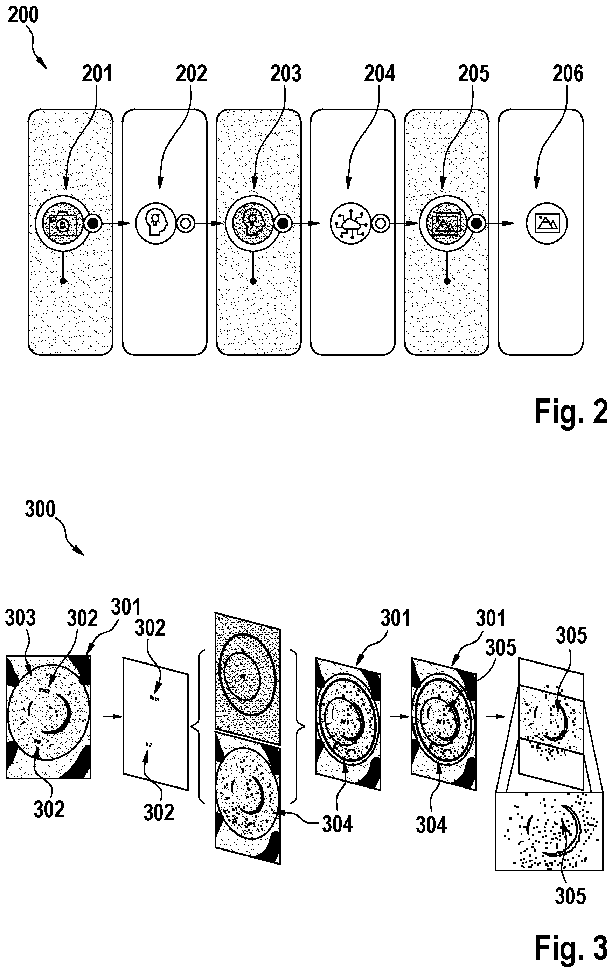

Fig. 2 shows the method steps of extraction of intended engravings to provide a filtered image (e.g., image without the intended engravings) 200 according to the present invention. In method step 201, a camera captures an image of the spectacle lens to be inspected. The camera may comprise a CCD sensor. In method step 202, the position of an identified intended engraving is detected in the captured image. The position of the identified engraving in the captured image may be stored. In a further embodiment, an expected location of an intended engraving may be known (e.g., based on standardization and/ or lens information). In method step 203, a region of interest (ROI) is defined based on the detected position of the respective intended engraving in the captured image. In a preferred embodiment, the region of interest may comprise a rectangle. In a further embodiment, the region of interest (ROI) may comprise any other shape suitable to narrow down an area of the intended engraving (e.g., a circle, a triangle, etc.). The ROI may be defined by the system itself. The ROI may be selected by an operator. Then, an image segmentation model is applied in the ROI. Thereby, every pixel is labeled based on its pixel color value in the ROI. Based on a pre-defined sensitivity, pixels comprising pixel color values in a certain range are equipped with the same label. Based on this, the image is segmented in a set of segments belonging to an intended engraving and segments not belonging to the intended engraving. In method step 204, a pixel color value is calculated based on pixels in the ROI. Thereby, only those pixels are considered, which do not belong to the intended engraving. In a preferred embodiment, the artificial intelligence-based infill-model may be used. In further embodiments, the pixel color value may be an average of all pixels in the ROI not belonging to the intended engraving. In another embodiment, the pixel color value may be a median of all pixels in the ROI not belonging to the intended engraving. In other embodiments, the pixel color value may correspond to the pixel color value, which occurs most frequently in the ROI (except the pixels belonging to the intended engraving). In step 205, the pixels belonging to the intended engravings are masked. Thereby, the pixels belonging to the intended engravings are substituted with pixels comprising the pixel color value, which has been calculated in step 204. The steps 202, 203, 204 and 205 are applied on every intended engraving separately. The steps 202-205 for different engravings may be applied in a parallel manner such that they can be evaluated at the same time. The steps 202-205 for different engravings may be applied in a consecutive manner.
Fig. 3 illustrates a method 300 of an extraction of intended engravings 302 in a captured image 301 from a spectacle lens 303, 304 according to the present invention. The intended engravings 302 comprise numbers and symbols, which serve as orientation marks. In a preferred embodiment, the intended engravings may comprise orientation marks like for example numbers, signs and/ or letters. In further embodiments the intended engravings may comprise a code (e.g., a DMC, a bar code, etc.), a structure suitable for myopia control (e.g., a diffractive ring structure or other diffractive structures), an electronic structure used in smart lenses, an optical structure, an individualized information (e.g., an abbreviation of a name or another abbreviation) or a design pattern. In other embodiments, the intended engravings may comprise a combination thereof. The spectacle lens 303, 304 may be a semi-finished spectacle lens blank, a semi-finished uncut spectacle lens or a semi-finished spectacle lens. In further embodiments, the spectacle lens may be any other lens, which is used in the ophthalmic industry. The captured image 301 of the spectacle lens 303 discloses intended engravings 302. After the extraction of the intended engravings 302 as explained above, the captured image 301 of spectacle lens 304 does not disclose intended engravings 302. The captured image 301, where the intended engravings 302 are extracted from the spectacle lens 304 only disclose objects, which are not expected and thus are cosmetic defects 305 or unknown objects. The cosmetic defect detection is performed on the captured image 301, where the intended engravings 302 are extracted from the spectacle lens 304.

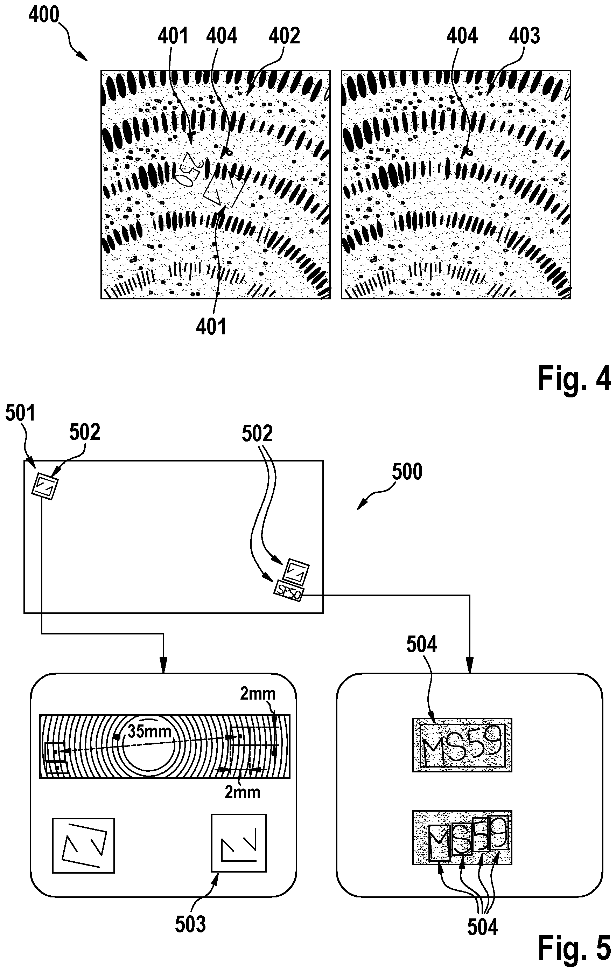

Fig. 4 illustrates the extraction 400 of the intended engravings 401 in the region of interest ROI 402, 403 in the captured image. In this embodiment, the intended engravings 401 comprises three numbers "2", "5" and "0" and two symbols, which serves as orientation marks. In further embodiments, the intended engravings may comprise further orientation marks (e.g., plus, minus, etc.), a code (e.g., a DMC or a bar code), a structure suitable for myopia control (e.g., a diffractive ring structure or other diffractive structures), an electronic structure used in smart lenses, an optical structure, an individualized information (e.g., an abbreviation of a name or another abbreviation), a design pattern or a combination thereof. The remaining pattern, which comprises a rod-shaped ring structure 404 may be maintained or in a further removing step may be extracted before the cosmetic defect detection is performed. The rod-shaped ring structure 404 is a cosmetic defect based on a polishing error. The extracted intended engravings 401 are removed in such a way that an overlap with the rod-shaped ring structure 404 does not impact the rod-shaped ring structure 404. That is, the rod-shaped ring structure 404 is maintained entirely (even in places of the overlap) when the intended engravings 401 are extracted 400. In particular, every structure, even in case of an overlap with the intended engravings 401, is maintained when the step of extraction is carried out. In a preferred embodiment, artificial intelligence-based infill-model may be used to achieve this result. After the extraction of pixels, which belong to the intended engravings 401, the extracted pixels are refilled with pixels comprising a pixel color value according to one of the refilling methods as explained above.
Fig. 5 shows a method 500 for identifying of intended engravings according to the present invention. Thereby, a ROI 501 of an image of a spectacle lens is artificially generated comprising two types of orientation marks 502. In a further embodiment, a real captured image may be used. The ROI is used to prepare the computer-implemented method to recognize intended engravings. In a preferred embodiment, a pattern matching algorithm may be used. In further embodiments, any other algorithm may be used, which is suitable to identify and compare detected structures with stored or learned structures. In one embodiment, a list of possible intended engravings may be stored in a data base or a global data base that the computer-implemented method can access. The list of intended engravings may be established manually by an operator (e.g., label and assign intended engravings). The computer-implemented method may then compare the stored intended engravings with the detected object in the captured image and may identify a detected object as an intended engraving when the degree of matching is above a pre-defined threshold. The pre-defined threshold may be dependent on the complexity of the structure of the intended engraving. In another embodiment, the computer-implemented method may has learned possible engravings by a training method using artificial intelligence (e.g., supervised learning). The training may be based on real or simulated data. During the training, the detected objects may be labeled as intended engravings manually by an operator. Further classification may be used based on dimension, shape and location of the intended engravings. In a further embodiment, more than one neural network may be used. In another embodiment, the two or more neural networks may perform independently from each other. The neural network may be a supervised neural network. An operator may label the intended engravings manually. The operator may provide feedback manually to the neural network. The pre-defined threshold may be based on the confidence value and/ or the complexity of the intended engraving.
   In the method 500, intended engravings 503, 504 are identified based on the stored or learned intended engravings 502. Thereby, also defective intended engravings 503 are identified. According to the present invention, a defective intended engraving corresponds to an intended engraving, where a part of the intended engraving is missing. As explained above, based on the degree of matching a reliable association is still possible. The required degree of matching may vary with the complexity of the structure of the intended engraving. In case of a simple structure like intended engraving 503, the required degree of matching may be over 70 precent to ensure a reliable association. Engraving 504 comprises a chain of four letters and numbers. The computer-implemented method is able to identify single letters and numbers in the chain of letters and numbers.

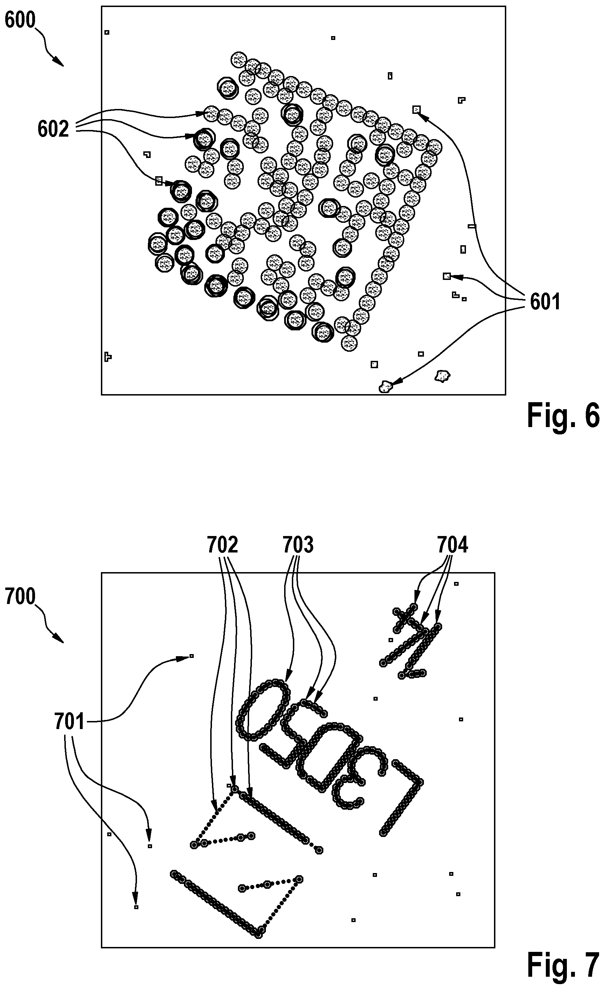

Figure 6 and Figure 7 illustrate the characteristic structure of intended engravings 602, 702, 703, 704 according to the present invention. In the preferred embodiment, the intended engravings 602, 702, 703, 704 may be manufactured by laser radiation in a direct manner (e.g., laser radiation applied to the lens) or indirect manner (e.g., laser radiation applied on the mold). In another embodiment, the intended engravings 602, 702, 703, 704 may be applied to the lens or to the mold by mechanical (e.g., polishing) or chemical (e.g., etching) processing steps. Based on the preferred embodiment, the laser radiation leads to a characteristic circle structure of the intended engravings 602, 702, 703, 704. That is, every intended engraving 602, 702, 703, 704 comprises a structure of interrelated circular formations. Based on the specific structure a neural network can be trained. Cosmetic defects 601, 701 may be cosmetic defects of the first sub-class. Cosmetic defects 601, 701 may comprise a punctual extension of less than 1mm.

## Claims

1. A computer-implemented method for identifying cosmetic defects of a spectacle lens, comprising:
identifying, if at least one detected object in a captured image of the spectacle lens is associated with a first plurality of features; and
extracting, the at least one detected object associated with the first plurality of features from the captured image before a cosmetic defect detection is performed.

2. The method according to claim 1, wherein the first plurality of features comprises intended engravings of the spectacle lens.

3. The method according to claim 2, wherein the intended engravings comprise at least one of:
- an orientation mark,
- a code,
- a structure suitable for myopia control,
- an electronic structure,
- an optical structure,
- an individualized information or design pattern.

4. The method according to one of the claims 1 to 3, further comprising:
identifying, if the least one detected object in the captured image of the spectacle lens is associated with a second plurality of features.

5. The method according to claim 4, wherein the at least one detected object, associated with a second plurality of features, is identified at a position in the captured image, where the at least one detected object associated with the first plurality of features has been extracted from the captured image.

6. The method according to one of the claims 4 to 5, wherein the at least one detected object associated with the second plurality of features comprises a cosmetic defect of the spectacle lens.

7. The method according to claim 6, wherein the cosmetic defect is transparent or opaque.

8. The method according to one of the claims 4 to 7, wherein the at least one detected object associated with the second plurality of features is classified.

9. The method according to one of the claims 6 to 8, wherein the detected cosmetic defect is classified based on its dimension.

10. The method according to one of the claims 6 to 9, wherein the detected cosmetic defect is classified in a defect category of a plurality of defect categories.

11. The method according to claim 10, wherein the plurality of defect categories comprises at least one of:
- surface defects,
- substrate defects,
- finishing defects.

12. The method according to one of the claims 1 to 11, wherein a pattern matching algorithm is used comprising an artificial neural network, wherein the artificial neural network is trained to identify, if the at least one object in the captured image is associated with the first plurality of features.

13. An apparatus for identifying cosmetic defects of a spectacle lens, comprising:
means for identifying, if at least one detected object in a captured image of the spectacle lens is associated with a first plurality of features;
means for extracting, the at least one detected object associated with the first plurality of features from the captured image before a cosmetic defect detection is performed.

14. A computer-implemented method for training an artificial neural network for identifying intended engravings in a captured image of a spectacle lens, the method comprising:
receiving captured images of a spectacle lens comprising intended engravings, wherein each of the intended engravings comprise a plurality of circles; and
training an artificial neural network based on received images to identify intended engravings in a captured image of a spectacle lens, wherein the artificial neural network is trained to use circlet transformation to detect the plurality of circles of the intended engravings.

15. A computer program comprising instructions which, when executed by a computer, cause the computer to perform the steps of one of the methods of one of the claims 1-12 or 14.
